# NEUE EUROPÄISCHE PATENTSCHRIFT

(11) **EP 0 320 682 B2**
(45) Veröffentlichungstag und Bekanntmachung des Hinweises auf die Entscheidung über den Einspruch: **25.01.1995**
(45) Hinweis auf die Patenterteilung: 21.10.1992
(21) Anmeldenummer: 88119750.3
(22) Anmeldetag: 26.11.1988
(51) Int. Cl.: B01D 53/34, C22B 34/12, C22B 7/02

(54) **Verfahren zur Herstellung von Titandioxid**
Process for the production of titanium dioxide
Procédé pour la fabrication du dioxyde de titane

(30) Priorität: 17.12.1987 DE 3742838
(43) Veröffentlichungstag der Anmeldung: 21.06.1989
(73) Patentinhaber: KRONOS TITAN-Gesellschaft mbH, D-51307 Leverkusen (DE)
(72) Erfinder: Hartmann, Achim, Dipl.-Ing., D-5024 Pulheim (DE)

(56) Entgegenhaltungen:
- EP-A- 0 133 505
- EP-A- 0 150 282
- DE-A- 2 215 177
- DE-A- 2 951 425
- DE-B- 1 200 267
- DECHEMA-Monographie 75 (1974), Heft 1452-1485, S. 109-124
- Ullmanns Encyklopädie der technischen Chemie, 4. Auflage, 1972, Band 2, S. 575-599

## Beschreibung

Die Erfindung betrifft ein Verfahren zur Herstellung von Titandioxid durch Fällen von Titandioxidhydrat durch thermische Hydrolyse aus einer Titanylsulfatlösung, die nach dem Aufschluß von titan- und eisenhaltigen Materialien in Schwefelsäure erhalten wird, Abtrennen des ausgefällten Titandioxidhydrates von der Hydrolysenmutterlauge durch Filtration, Waschen des abgetrennten Titandioxidhydrates, wobei Waschfiltrat, das geringe Mengen an Schwefelsäure und Eisensulfaten enthält, anfällt, und Glühen des gewaschenen Titandioxidhydrates.

Bei einem solchen Verfahren, das unter der Bezeichnung "Sulfatprozeß" bekannt ist, entstehen an verschiedenen Stellen Abgase und Abwässer, deren Beseitigung einerseits wegen der zunehmend gestiegenen Anforderungen an die Umweltentlastung problematisch geworden ist und andererseits mit einem Verlust an Wertstoffen verbunden ist. Zu den Abgasen gehören unter anderem die beim Aufschluß der titanhaltigen Materialien entstehenden Abgase und die Abgase, die bei der Glühung des Titandioxidhydrates entstehen. Diese Abgase enthalten außer feinverteilten Feststoffen. wie Erzstaub oder Titandioxidstaub, Schwefeltrioxid und Schwefelsäure noch Wasserdampf, Kohlendioxid, Sauerstoff und Schwefeldioxid. Ferner können auch an anderen Stellen des Sulfatprozesses sowie bei anderen Titandioxid-Herstellungsprozessen, z. B. bei solchen Prozessen, bei denen das Titandioxid durch Herstellung von Titantetrachlorid und Umsetzen des Titantetrachlorids mit sauerstoffhaltigen Gasen hergestellt wird, dem sogenannten "Chloridprozeß". Abgase entstehen, die Schwefeloxide enthalten. Während Feststoffe, Schwefeltrioxid und Schwefelsäure problemlos aus den Abgasen abgeschieden werden können, macht der Schwefeldioxidgehalt der Abgase Probleme.

Aus Gründen des Umweltschutzes muß der Schwefeldioxidgehalt im Abgas weitestgehend herabgesetzt werden, ehe es in die Atmosphäre entlassen werden kann. Bisher erfolgte die Entfernung der Schwefelverbindungen oft durch Waschen des Abgases mit Wasser. Dadurch können zwar Schwefeltrioxid und Schwefelsäure problemlos entfernt werden, die Entfernung von Schwefeldioxid war aber oft ungenügend.

Bei der Waschung des durch Filtration von der Hydrolysenmutterlauge abgetrennten Titandioxidhydrates entstehen Lösungen, die schwach schwefelsauer sind und geringe Mengen an während der Hydrolysestufe nicht gefällten Metallsulfaten, insbesondere Eisen(II)-sulfat, enthalten. Diese Lösungen werden weiterhin als "Waschfiltrat" bezeichnet. Dieses Waschfiltrat wurde bisher in der Regel in die Kanalisation eingeleitet. Das war wegen des nur geringen Gehaltes an den genannten Stoffen bis vor kurzem nicht zu beanstanden. Wegen der steigenden Umweltschutzanforderungen muß aber davon jetzt Abstand genommen werden. Außerdem gingen bisher durch die Entfernung des Waschfiltrates Wertstoffe, insbesondere Schwefelsäure, verloren, die trotz ihrer geringen Konzentration im Waschfiltrat wegen des großen Maßstabes, in dem der Sulfatprozeß durchgeführt wird, mengenmäßig ebenfalls nicht ohne Bedeutung sind. Es bestand damit die Aufgabe, dieses Waschfiltrat wieder im Prozeß unterzubringen. Es wurde zwar versucht, das Waschfiltrat direkt beim Aufschluß, z. B. als Startwasser, oder beim Lösen des bei vielen Aufschlußverfahren gebildeten festen Aufschlußkuchens einzusetzen, aber es bestand die Gefahr, daß durch Einsatz des Waschfiltrates, insbesondere wenn es in größeren Mengen eingesetzt wird, der Aufschluß und/oder die Aufschlußlösung ungünstig beeinflußt werden. Insbesondere entstand bei dem Einsatz dieses Waschfiltrates beim Lösen des Aufschlußkuchens die Gefahr, daß es zur Bildung unerwünschter Keime oder zu einer vorzeitigen Hydrolyse des Titanylsulfates kommt. Dieser Gefahr konnte nur begegnet werden, wenn eine Lösung eingesetzt wird, die eine Schwefelsäurekonzentration von einigen Gewichtsprozent, vorzugsweise nicht unter 8 Gewichtsprozent, aufweist.

Es wurde nun nach einem Verfahren gesucht, mit dem nicht nur der Schwefeldioxidgehalt der Abgase mit Sicherheit so weit herabgesetzt wird, daß das gereinigte Abgas ohne weiteres in die Atmosphäre entlassen werden kann, sondern weiches auch gestattet, diesen Schwefeldioxidgehalt der Abgase für die Titandioxidherstellung zu verwerten und das Waschfiltrat der Titandioxidhydratabtrennung im Rahmen des Sulfatprozesses so weit wie möglich wiederzuverwerten und dabei seinen Schwefelsäuregehalt nutzbar zu machen.

Es ist bereits aus der CS-B-220 670 ein Verfahren bekannt, Schwefeloxide aus Industrieabgasen unter Ausnutzung von Abfall-Schwefelsäure der Titandioxid-Industrie auszuwaschen. Die hier verwendeten Waschlösungen weisen einen Gehalt von 10 bis 30 Gewichtsprozent H₂SO₄, 1 bis 13 Gewichtsprozent Eisen(II)-sulfat und gegebenenfalls bis zu 2 Gewichtsprozent Titanylsulfat auf; sie entsprechen damit einer Hydrolysenmutterlauge, nicht dagegen Waschflüssigkeiten aus der Waschung des Titandioxidhydrates. Hierbei erfolgt die Waschung im Gegenstrom in nur einer Stufe unter adiabatischen Bedingungen bei einer erhöhten Temperatur von 75 bis 190 °C, wobei die Waschlösung durch Ausnutzung des Wärmeinhaltes des Gases teilweise konzentriert wird. Der Wirkungsgrad der Schwefeldioxidabtrennung ist unzureichend; infolge des hohen Feststoffgehaltes der Waschflüssigkeit kann es leicht zur Bildung von Ansätzen in der Waschvorrichtung kommen.

Eine Unterbringung des Waschfiltrates aus der Titandioxidhydratabtrennung ist bei diesem Verfahren nicht möglich und auch nicht vorgesehen.

Es sind weitere Veröffentlichungen bekannt, die sich mit der Absorption von Schwefeloxiden durch eisenhaltige Abwässer der Pigmentherstellung befassen.

In einer Veröffentlichung (KHIMICHESKAYA PROMYSHLENNOST' (The Soviet Chemical Industry) Jahrgang 1983 (9), Moskau, G.L. ZVYAGINTSEV et. al. "Industrial Tests of a Process of Trapping Sulfur Dioxide with Iron Vitriol Solutions" Seiten 543 bis 546 (Chemical Abstracts Band 99 Referat 199808s)) werden zum Waschen des Abgases Lösungen von Eisen(II)-sulfat-Heptahydrat oder von bei der Aufkonzentrierung von Hydrolysenmutterlauge abgetrenntem Eisen(II)-sulfat-Monohydrat eingesetzt. Die erstgenannten Lösungen enthalten 1,5 bis 3 Gewichtsprozent Eisen, die letztgenannten Lösungen 2 Gewichtsprozent Eisen. Diese Lösungen sind nicht ausreichend wirksam, und die verbrauchten Lösungen werden nicht in den Sulfatprozeß zurückgeführt, sondern anderweitig verwertet.

Nach dieser Veröffentlichung kann zwar die Schwefeldioxidabsorption erhöht werden, hierzu ist aber neben der Zugabe der Eisensulfatlösung noch die gleichzeitige Zugabe einer alkalisch reagierenden Substanz erforderlich. Ein solcher Zusatz einer zusätzlichen Substanz ist aber mit erhöhten Kosten verbunden. Außerdem führt der Zusatz der alkalisch reagierenden Substanz zu Produkten, die nicht ohne weiteres verwertet werden können und deshalb mit hohen Kosten beseitigt oder abgelagert werden müssen. Das führt zu einer erneuten Belastung der Umwelt.

In einer weiteren Veröffentlichung (KHIMICHESKAYA PROMYSHLENNOST' (The Soviet Chemical Industry) Jahrgang 1984 (9), Moskau, G.L. ZVYAGINTSEV "Industrial Tests of the Process of Absorption of Sulfur Oxides by Iron-Containing Wastewater" Seiten 546 bis 547 (Chemical Abstracts Band 102 Referat 11613c)) werden zum Auswaschen von Schwefeldioxid aus dem Abgas Abwässer verwendet, welche aus einer Anlage zur Herstellung von Eisenoxidpigmenten aus den bei der Titandioxidherstellung anfallenden Eisensulfaten stammen. Diese Abwässer enthalten neben festem Eisenoxid 0,04 bis 0,3 Gewichtsprozent gelöstes Eisen, wobei das Eisen im wesentlichen im dreiwertigen Zustand vorliegt. Es wird ein aufwendiges Waschsystem mit mehreren verschiedenen Apparaten verwendet, und die Wirksamkeit dar Schwefeldioxidentfernung ist bei technischer Durchführung dieses Verfahrens unbefriedigend. Die Waschflüssigkeit wird getrennt in die einzelnen Waschvorrichtungen der Anlage eingespeist, eine Wiederverwertung der gebrauchten Waschflüssigkeit ist nicht vorgesehen, und die Einsparung an Waschwasser beträgt nur 20 %. Das Verfahren ist davon abhängig, daß im Verbund mit der Titandioxidfabrikation eine Anlage für die Herstellung von Eisenoxidpigmenten betrieben wird.

Auch die in dieser Veröffentlichung verwendeten Waschflüssigkeiten unterscheiden sich wesentlich von den Waschfiltraten der Titandioxidhydratabtrennung. Eine Übertragung des in dieser Veröffentlichung beschriebenen Verfahrens auf das Problem, von dem die vorliegende Anmeldung ausgeht, ist nicht möglich.

Der Erfindung liegt die Aufgabe zugrunde, die Umweltbelastung herabzusetzen und die in den Abgasen enthaltenen Schwefelverbindungen nutzbringend zu verwerten.

Zur Lösung dieser Aufgabe wurde ein neues Verfahren zur Herstellung von Titandioxid durch Fällen von Titandioxidhydrat durch thermische Hydrolyse aus einer Titanylsulfatlösung, die nach dem Aufschluß von titan- und eisenhaltigen Materialien in Schwefelsäure erhalten wird, Abtrennen des ausgefällten Titandioxidhydrates von der Hydrolysenmutterlauge durch Filtration, Waschen des abgetrennten Titandioxidhydrates, wobei Waschfiltrat, das geringe Mengen an Schwefelsäure und Eisensulfaten enthält, anfällt, und Glühen des gewaschenen Titandioxidhydrates gefunden.

Dieses Verfahren ist dadurch gekennzeichnet, daß
a1) ein Abgas, das beim Glühen des gewaschenen Titandioxidhydrates als Calcinierabgas anfällt, das bis 4000 mg/m³ Schwefeldioxid (Gas im Normzustand nach Abzug des Feuchtegehaltes an Wasserdampf) und mindestens 8 Volumenprozent Sauerstoff, bezogen auf trockenes Gas nach Abzug des Feuchtegehaltes an Wasserdampf, enthält, mit dem eine Waschflüssigkeit bildenden Waschfiltrat, das zu Beginn des Kontaktes mit dem Abgas 0,2 bis 4 Gewichtsprozent H₂SO₄ und 0,2 bis 1 Gewichtsprozent Eisen in Form von Eisensulfaten enthält, behandelt wird, wobei der größte Teil des im Abgas enthaltenen Schwefeldioxids vom Waschfiltrat aufgenommen und in Schwefelsäure umgewandelt wird, wodurch der Schwefelsäuregehalt des Waschfiltrates im Verlauf der Behandlung des Abgases auf 8 bis 13 Gewichts-Prozent angehoben und eine schwefelsäurehaltige Prozeßlösung gebildet wird,
a2) im Waschfiltrat, bevor es mit dem Abgas in Berührung gebracht wird, ein Verhältnis der Schwefelsäurekonzentration zu der Gesamteisenkonzentration von mindestens 1 eingestellt wird und daß dieses Verhältnis in der aus dem Waschfiltrat gebildeten Waschflüssigkeit während der Behandlung des Abgases bis auf über 20 angehoben wird, und
b) diese schwefelsäurehaltige Prozeßlösung im Rahmen des Titandioxid-Herstellungsprozesses eingesetzt wird, wobei
c) die Behandlung des Abgases mit der Waschflüssigkeit, in welcher ein Verhältnis von dreiwertigem Eisen zu Gesamteisen von mehr als 0,05 eingehalten wird, in einer Reihe von mindestens zwei hintereinandergeschalteten Waschstufen derart durchgeführt wird, daß
   c₁) das unbehandelte Abgas in die erste Waschstufe und das von der Titandioxidhydratwaschung herstammende frische Waschfiltrat in die letzte Waschstufe eingeführt wird,
   c₂) das Abgas hintereinander durch die einzelnen Waschstufen hindurchgeführt und dort mit der aus dem Waschfiltrat gebildeten Waschflüssigkeit, deren Schwefelsäuregehalt von der, in Richtung des Abgasstromes gesehen, ersten bis zur letzten Waschstufe stufenweise abnimmt, dadurch behandelt wird, daß in jeder Waschstufe die Waschflüssigkeit in einem Waschturm in das Abgas in feinverteilter Form eingeführt wird, und
   c₃) das gereinigte Abgas aus der letzten Waschstufe und die aus dem Waschfiltrat gebildete schwefelsäurehaltige Prozeßlösung aus der ersten Waschstufe abgezogen wird.

Bei diesem Verfahren ist es besonders günstig, so zu verfahren, daß in jede Waschstufe außer der, in Richtung des Abgasstromes gesehen, letzten Waschstufe Waschflüssigkeit aus derjenigen Waschstufe eingeführt wird, die der betreffenden Waschstufe, in Richtung des Abgasstromes gesehen, unmittelbar folgt.

In einer bevorzugten Ausführungsform des erfindungsgemäßen Verfahrens wird die Behandlung des Abgases in drei Waschstufen vorgenommen.

Im allgemeinen wird in jeder Waschstufe in der Waschflüssigkeit ein bestimmter Bereich für den Schwefelsäuregehalt eingestellt.

Nach einer günstigen Ausführungsform der Erfindung kann dabei so vorgegangen werden, daß der Schwefelsäuregehalt in der Waschflüssigkeit dadurch eingestellt wird, daß mindestens ein Teil der Waschflüssigkeit innerhalb der Waschstufe zwischen dem Waschturm und einem Vorratsbehälter im Kreislauf geführt wird.

Nach einer weiteren Ausführungsform der Erfindung wird außer in die, in Richtung des Abgasstromes gesehen, letzte Waschstufe auch in eine oder mehrere der anderen Waschstufen frisches Waschfiltrat eingeführt.

Nach noch einer Ausführungsform der Erfindung wird in eine oder mehrere der Waschstufen Waschflüssigkeit aus einer und/oder mehreren derjenigen Waschstufen eingeführt, die nicht der betreffenden Waschstufe, in Richtung des Abgasstromes gesehen, unmittelbar folgen.

Gemäß einer weiteren Ausführungsform der Erfindung wird in eine oder mehrere der Waschstufen Waschflüssigkeit aus einer und/oder mehreren derjenigen Waschstufen eingeführt, die der betreffenden Waschstufe, in Richtung des Abgasstromes gesehen, vorausgehen.

Alle Verfahrensweisen können miteinander kombiniert werden.

Eine günstige Ausführungsform der Erfindung ist dadurch gekennzeichnet, daß die Behandlung des Abgases in drei Waschstufen derart vorgenommen wird, daß, in Richtung des Abgasstromes gesehen, in der ersten Waschstufe in der Waschflüssigkeit ein Schwefelsäuregehalt von 8 bis 12 Gewichtsprozent, in der zweiten Waschstufe in der Waschflüssigkeit ein Schwefelsäuregehalt von 3 bis 7 Gewichtsprozent und in der dritten Waschstufe in der Waschflüssigkeit ein Schwefelsäuregehalt von 0,2 bis 4 Gewichtsprozent eingestellt wird.

Die bei der Behandlung des Abgases aus dem Waschfiltrat erhaltene schwefelsäurehaltige Prozeßlösung kann an verschiedenen Stellen des Titandioxid-Herstellungsprozesses eingesetzt werden.

Nach einer bevorzugten Ausführungsform der Erfindung wird die schwefelsäurehaltige Prozeßlösung in den Aufschluß zurückgeführt.

Eine weitere günstige Ausführungsform der Erfindung ist dadurch gekennzeichnet, daß beim Aufschluß von titan-und eisenhaltigen Materialien ein fester Aufschlußkuchen gebildet wird, der unter Bildung der Titanylsulfatlösung gelöst wird, wobei beim Lösen des Aufschlußkuchens die schwefelsäurehaltige Prozeßlösung eingesetzt wird.

Die schwefelsäurehaltige Prozeßlösung kann auch in mehreren Anteilen gleichzeitig an verschiedenen Stellen des Titandioxid-Herstellungsprozesses eingesetzt werden.

Die erfindungsgemäßen Verfahren haben den Vorteil, daß gleich zwei Abfallstoffe des Titandioxid-Herstellungsprozesses, die bisher zu einer erhöhten Umweltbelastung führten oder große zusätzliche Aufwendungen für die Beseitigung der Schadstoffe erforderten, nämlich das in den Abgasen enthaltene Schwefeldioxid und das Waschfiltrat der Titandioxidhydratabtrennung, von der Umwelt ferngehalten und im Rahmen des Sulfatprozesses nutzbringend verwertet werden. Die Schwefeldioxidentfernung aus dem Abgas kann in einer einfach gebauten Vorrichtung mit einer sehr hohen Ausbeute und mit großer Zuverlässigkeit erfolgen. Die beim Waschen des Abgases erhaltene schwefelsäurehaltige Prozeßlösung kann im Rahmen des Sulfatprozesses nutzbringend verwertet werden. Ihr Einsatz beim Aufschluß des titanhaltigen Materials und gegebenenfalls beim Lösen des Aufschlußkuchens führt wegen ihres erhöhten Schwefelsäuregehaltes zu keinen Schwierigkeiten, die beim direkten Einsatz des Waschfiltrates durch die Bildung von unerwünschten Keimen oder durch eine vorzeitige Hydrolyse des Titanylsulfates eintreten. Die Verwertung des im Abgas enthaltenen Schwefeldioxids führt ferner zu einer Einsparung an frischer Schwefelsäure im Sulfatprozeß.

Es gelingt mit dem erfindungsgemäßen Verfahren, den Schwefeldioxidgehalt des Abgases, der bis 4000 mg/m³ (Gas im Normzustand nach Abzug des Feuchtegehaltes an Wasserdampf) betragen kann, mit einer Ausbeute von bis zu 94 % zu entfernen und dabei die Schwefelsäurekonzentration im Waschfiltrat so weit zu steigern, daß das Waschfiltrat problemlos im Sulfatprozeß untergebracht werden kann. Das gereinigte Abgas weist einen Schwefeldioxidgehalt von höchstes 400 mg/m³ (Gas im Normzustand nach Abzug des Feuchtegehaltes an Wasserdampf) auf; das gereinigte Abgas entspricht damit den gesetzlichen Bestimmungen. Oft liegt der Schwefeldioxidgehalt des gereinigten Abgases sogar wesentlich unter diesem Wert.

Es war bisher nicht bekannt gewesen, daß man Waschfiltrate mit ihrem geringen Schwefelsäure- und Eisensulfatgehalt durch eine einfache Verfahrensweise so weit an Schwefelsäure anreichern kann, daß die so erhaltene schwefelsäurehaltige Prozeßlösung problemlos im Sulfatprozeß untergebracht werden kann. Im allgemeinen beträgt der Schwefelsäuregehalt des Waschfiltrates nur etwa 0,2 bis 4 Gewichtsprozent H₂SO₄ und sein Eisensulfatgehalt nicht mehr als 1, vorzugsweise 0,2 bis 0,3. Gewichtsprozent, berechnet als Fe: es wurde bei der Entwicklung der vorliegenden Erfindung überraschend erkannt, daß es durch ein einfaches unkompliziertes Verfahren möglich ist, den geringen Schwefelsäuregehalt des Waschfiltrates ohne weiteres auf Schwefelsäuregehalte bis auf mehr als 10 Gewichtsprozent H₂SO₄ anzuheben. Es wurde weiter erkannt, daß der Eisengehalt des Waschfiltrates trotz seiner geringen Größe von entscheidender Bedeutung für die Durchführung des erfindungsgemäßen Verfahrens ist.

Es ist zwar aus der DE-A-22 15 177 ein Verfahren bekannt, bei dem man schwefeldioxidhaltige Abgase durch Waschen mit einer Schwefelsäurelösung unter katalytischer Mitwirkung von Eisen(III)-Ionen weitgehend vom Schwefeldioxid befreien kann, doch arbeitet dieses Verfahren mit einer höheren Ausgangskonzentration der Schwefelsäure von 5 bis 40 Gewichtsprozent H₂SO₄.

Wesentlich für die Durchführung des erfindungsgemäßen Verfahrens ist eine bestimmte Prozeßführung, bei der mehrere Maßnahmen genau aufeinander abgestimmt werden müssen.

Die Erfindung, bei der das Abgas und das Waschfiltrat im Gegenstrom zueinander geführt werden, macht die Tatsache zunutze, daß die Oxidation des Schwefeldioxids in der Waschflüssigkeit durch deren Schwefelsäurekonzentration beeinflußt wird und daß im vorgesehenen Bereich der Schwefelsäurekonzentration die Wirksamkeit der Schwefeldioxidoxidation und damit die Entfernung des Schwefeldioxids aus dem Abgas mit zunehmender Schwefelsäurekonzentration der Waschflüssigkeit abnimmt. Durch die Gegenstromführung wird das frische Abgas mit seinem hohen Schwefeldioxidgehalt mit einer Waschflüssigkeit zusammengebracht, die einen relativ hohen Schwefelsäuregehalt aufweist. Je weniger Schwefeldioxid die Gasphase im Verlauf des Waschvorganges aufweist, desto geringer ist auch der Schwefelsäuregehalt der mit dieser Gasphase in Berührung gebrachten Waschflüssigkeit und desto wirksamer ist dann diese Waschflüssigkeit. Diese Verfahrensweise funktioniert nur, wenn der waschvorgang in mindestens zwei hintereinandergeschalteten Waschstufen erfolgt, wobei überdies der Schwefelsäuregehalt in der Waschflüssigkeit von Waschstufe zu Waschstufe stufenweise abnehmen muß. Nach oben ist die Anzahl der Waschstufen nur durch die, durch die steigende Anzahl dieser Waschstufen bedingten, zusätzlichen Kosten begrenzt. Oft gelingt es, bereits mit drei Waschstufen eine Schwefeldioxidentfernung mit sehr gutem Wirkungsgrad zu erzielen.

Für die Wirksamkeit der Behandlung des Abgases ist es ferner erforderlich, daß die flüssige Phase in möglichst feiner Verteilung mit der Gasphase in Berührung tritt. Es wurde gefunden. daß hierzu oft eine einfache Verdüsung der Waschflüssigkeit in den leeren, ohne Einbauten versehenen Innenraum eines in der jeweiligen Waschstufe vorgesehenen Waschturmes geeignet ist. Vorzugsweise wird die Waschflüssigkeit von oben nach unten in den von unten in den senkrecht stehenden Waschturm eintretenden Gasstrom eingedüst. Ein Teil der Düsen kann aber auch nach oben gerichtet sein. Das Ausmaß der jeweils erforderlichen Aufteilung der Waschflüssigkeit und die Anzahl der erforderlichen Düsen kann durch einfache Versuche ermittelt werden.

Eine geeignete Ausführungsform des erfindungsgemäßen Verfahrens besteht darin, daß in den Waschtürmen eine Füllkörperschüttung angeordnet wird, die Waschflüssigkeit von oben in voller Menge auf die Füllkörperschüttung aufgebracht und in ihr verteilt wird und das Abgas von unten in die Füllkörperschüttung eingeführt und innerhalb der Füllkörperschüttung mit der feinverteilten Waschflüssigkeit in Berührung gebracht wird.

Es wurde ferner gefunden, daß eine gewisse Konzentration an dreiwertigem Eisen in der Waschflüssigkeit für das Gelingen des erfindungsgemäßen Verfahrens von Wichtigkeit ist. Nähere Untersuchungen zeigten, daß in Abwesenheit von dreiwertigem Eisen in der Waschflüssigkeit praktisch keine Oxidation des Schwefeldioxids stattfindet, daß aber dann, wenn das Verhältnis von dreiwertigem Eisen zu Gesamteisen in der Waschflüssigkeit den Wert 0,05 übersteigt, die Schwefeldioxidoxidation in der Lösung sprunghaft in Gang kommt. Nach oben kann dieses Verhältnis bis zum Wert 1 erhöht werden (dann liegt alles Eisen in der Waschflüssigkeit im dreiwertigen Zustand vor), jedoch wird man dieses Verhältnis nicht größer machen als unbedingt notwendig, weil es aus wirtschaftlichen Gründen (Einsparung von Reduktionsmitteln) erwünscht ist, daß in der in den Sulfatprozeß zurückgeführten Prozeßlösung ein möglichst geringer Gehalt an dreiwertigem Eisen vorhanden ist. Beispielsweise wird für das Verhältnis von dreiwertigem Eisen zu Gesamteisen in der Waschflüssigkeit ein Bereich von 0,5 bis 0,85 gewählt.

Es wurde weiter gefunden, daß die Herabsetzung der Wirksamkeit der Schwefeldioxidoxidation infolge der steigenden Schwefelsäurekonzentration in der Waschflüssigkeit durch eine steigende Konzentration an dreiwertigem Eisen in der Waschflüssigkeit ausgeglichen werden kann. Deshalb kann das Konzentrationsverhältnis von Schwefelsäure zu dreiwertigem Eisen in der Waschflüssigkeit als eine Größe angesehen werden, die den Schwefeldioxidumsatz beeinflußt. Bevorzugt soll der Wert des Konzentrationsverhältnisses von Schwefelsäure zu dreiwertigem Eisen in der Waschflüssigkeit zwischen 20 und 70 liegen. Der erforderliche Eisen(III)-Gehalt kann im Waschfiltrat vor seinem Einsatz durch Zugabe eines geeigneten Oxidationsmittels oder durch andere geeignete Methoden eingestellt werden, oder er kann sich zu Beginn des Waschvorgangs im Waschfiltrat von selbst einstellen.

Nach einer Ausführungsform der Erfindung wird in unterhalb der Waschtürme angeordneten Vorratsbehältern in die Waschflüssigkeit Luft eingeführt.

Es hat sich im allgemeinen als besonders günstig erwiesen, im Waschfiltrat, bevor es mit dem Abgas in Berührung gebracht wird, ein Verhältnis der Schwefelsäurekonzentration zu der Gesamteisenkonzentration von mindestens 1 einzustellen; dieses Verhältnis soll dann zweckmäßigerweise während der Behandlung des Abgases in der Waschflüssigkeit bis auf über 20 angehoben werden.

Weitere Einflußgrößen für die Durchführung des erfindungsgemäßen Verfahrens bilden die Kontaktzeit zwischen Waschflüssigkeit und Abgas und die Temperaturen von Waschflüssigkeit und Abgas. Die Temperatur der jeweiligen Gasphase muß vorzugsweise gleich oder höher als die Temperatur der mit ihr in Berührung stehenden flüssigen Phase sein. Auf jeden Fall darf der Taupunkt für Wasserdampf in der Gasphase nicht unterschritten werden. Andernfalls wird aus dem Abgas, das häufig erhebliche Mengen an Wasserdampf enthält, Wasser kondensiert, und es kommt so zu einer unerwünschten Verringerung der Schwefelsäurekonzentration in der Waschflüssigkeit. Bei der Temperatur des Abgases muß im allgemeinen noch berücksichtigt werden, daß das gereinigte Abgas nach dem Verlassen der letzten Waschstufe noch eine ausreichend hohe Temperatur besitzt, um es ohne zusätzliche Maßnahmen durch den Kamin abführen zu können. Mit fallender Temperatur in der Waschflüssigkeit steigt der Umsetzungsgrad des Schwefeldioxids. Die optimale Temperatur hierfür liegt gewöhnlich bei 40 °C. Die jeweils erforderlichen Werte für die Kontaktzeit und die Temperaturen können leicht durch Versuche ermittelt werden. Die erforderliche Kontaktzeit beeinflußt auch, neben der zu erreichenden Schwefelsäurekonzentration in der bei der Behandlung des Abgases aus dem Waschfiltrat erhaltenen schwefelsäurehaltigen Prozeßlösung, die im Rahmen des Titandioxid-Herstellungsprozesses eingesetzt werden soll, die Anzahl der einzusetzenden Waschstufen.

Die Behandlung des Abgases wird wegen der durchzusetzenden größeren Gasmengen vorzugsweise bei solchen Druckverhältnissen durchgeführt, daß das gereinigte Abgas bei einem möglichst geringen Überdruck über Normaldruck anfällt.

Innerhalb der einzelnen Waschstufen können die jeweils erforderlichen Konzentrationen und gegebenenfalls auch die Temperaturen in der Waschflüssigkeit eingestellt werden, indem beispielsweise die Waschflüssigkeit zwischen dem in der jeweiligen Waschstufe vorgesehenen Waschturm und einem Vorratsbehälter, in dem gegebenenfalls eine entsprechende Behandlung. z. B. Kühlung oder Erwärmung, der Waschflüssigkeit vorgenommen werden kann, im Kreislauf geführt wird und/oder indem frisches Waschfiltrat und/oder Waschflüssigkeit aus einer und/oder mehreren anderen als der, in Richtung des Abgasstromes gesehen, unmittelbar folgenden Waschstufe eingeführt wird. Die geeigneten Verhältnisse können sich aber auch innerhalb einer oder mehreren Waschstufen in der Waschflüssigkeit von selbst einstellen, was vorzugsweise in den mittleren Waschstufen der Fall ist. Gegebenenfalls kann ein Teil der Waschflüssigkeit von einer oder mehreren Waschstufen über eine oder mehrere, diesen Waschstufen benachbarte, Waschstufen in eine oder mehrere andere Waschstufen eingeführt werden, ohne daß er in den zwischenliegenden Waschstufen mit dem Abgas in Berührung gebracht wird.

Bevor das Abgas der erfindungsgemäßen Behandlung unterworfen wird, kann es von Feststoffteilchen. Schwefeltrioxid und Schwefelsäure befreit werden; hierfür können bekannte Verfahren engesetzt werden.

Das aus der letzten Waschstufe abgezogene Abgas ist in der Regel so rein, daß es direkt über den Kamin in die Atmosphäre abgegeben werden kann.

Der Aufschluß der titan- und eisenhaltigen Materialien, das Lösen des gegebenenfalls erhaltenen Aufschlußkuchens, das Fällen des Titandioxidhydrates aus der Titanylsulfatlösung und das Abtrennen und Waschen des Titandioxidhydrates und dessen Glühen können in üblicher Weise durchgeführt werden. Ebenso kann die Aufschlußlösung vor der Hydrolyse in üblicher Weise behandelt werden, z. B. durch Ausfällen und Abtrennen von Eisen(II)-sulfat-Heptahydrat, durch Klären, Eindampfen und Feinfiltration. Die Filtration des Titandioxidhydrates kann in beliebiger Weise, beispielsweise mit Hilfe eines Drehfilters oder eines mit Vakuum betriebenen Plattenfilters (Moorefilter), vorgenommen werden. Als titan- und eisenhaltige Materialien können alle üblichen Stoffe eingesetzt werden, wie z. B. Ilmenite, angereicherte Ilmenite, titanhaltige Schlakken oder Konzentrate, bei denen durch die teilweise Abtrennung des Eisens aus den Erzen der Titandioxidgehalt angereichert ist.

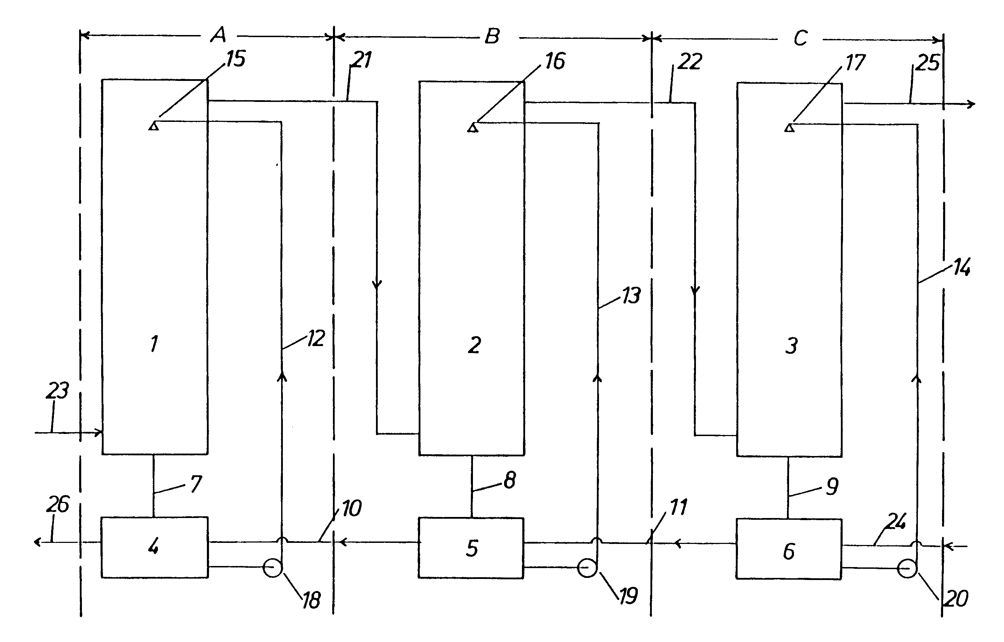

In der Abbildung wird eine geeignete Ausführungsform des erfindungsgemäßen Verfahrens durch ein Fließbild näher erläutert, ohne daß die Erfindung auf das in diesem Fließbild dargestellte Schema beschränkt sein soll.

In der Abbildung werden drei Waschstufen A, B und C dargestellt. In jeder Waschstufe ist ein Waschturm vorgesehen, und zwar in Waschstufe A der Waschturm 1, in Waschstufe B der Waschturm 2 und in Waschstufe C der Waschturm 3.

Unterhalb der Waschtürme 1, 2 und 3 sind Vorratsbehälter 4, 5 und 6 angeordnet, die durch Leitungen 7, 8 und 9 mit den Waschtürmen 1, 2 und 3 verbunden sind. Die Vorratsbehälter 4, 5 und 6 sind durch Leitungen 10 und 11 auch untereinander verbunden. Von den Voratsbehältern 4, 5 und 6 gehen außerdem Leitungen 12, 13 und 14 für die Waschflüssigkeit ab, die im oberen Ende der Waschtürme in Flüssigkeitsverteiler 15, 16, und 17 enden. Gegebenenfalls können bei leeren Waschtürmen in jedem Waschturm weitere Flüssigkeitsverteiler unterhalb der Flüssigkeitsverteiler 15, 16 und 17 angeordnet sein, die durch Abzweigungen aus den Leitungen 12, 13 und 14 gespeist werden. Die Waschflüssigkeit wird durch Pumpen 18, 19 und 20 in die Leitungen 12, 13 und 14 befördert. Von den Waschtürmen 1 und 2 gehen Leitungen 21 und 22 ab, die das behandelte Abgas in den unteren Teil des jeweils folgenden Waschturmes befördern. In den unteren Teil des Waschturms 1 mündet eine Leitung 23 für das zu reinigende Abgas und in den Vorratsbehälter 6 eine Leitung 24 für das aus der Filtrieranlage für das Titandioxidhydrat herangeführte Waschfiltrat. Am oberen Ende des Waschturms 3 ist eine Leitung 25 zum Abziehen des gereinigten Abgases vorgesehen, und am Vorratsbehälter 4 ist eine Leitung 26 zum Abziehen der bei der Behandlung des Abgases aus dem Waschfiltrat gebildeten schwefelsäurehaltigen Prozeßlösung angeordnet. In den Leitungen können (nicht eingezeichnete) Ventile zur Regelung der Flüssigkeitsströme angeordnet sein.

Die Anlage kann aus den üblichen Werkstoffen hergestellt sein. Die Waschtürme und die Vorratsbehälter bestehen vorzugsweise aus Kunststoffen wie z. B. Polyester. Polypropylen oder Polyethylen oder aus gummiertem Stahl. Die Füllkörper bestehen vorzugsweise ebenfalls aus den genannten Kunststoffen.

Das Abgas gelangt, nachdem es gegebenenfalls in einer Vorwaschstufe von Feststoffteilchen, Schwefelsäure und Schwefeltrioxid befreit wurde, durch die Leitung 23 in den Waschturm 1 der Waschstufe A, von dort durch die Leitung 21 in den Waschturm 2 der Waschstufe B und von da aus durch die Leitung 22 in den Waschturm 3 der Waschstufe C. In jedem der Waschtürme wird ein Teil des im Abgas enthaltenen Schwefeldioxids ausgewaschen. Das gereinigte Abgas wird schließlich durch die Leitung 25 aus dem Waschturm 3 der Waschstufe C abgezogen und gelangt, gegebenenfalls über eine Nachreinigung zur Entfernung von mitgerissenen Flüssigkeitströpfchen, in den Kamin.

Das aus der Filtrieranlage für das Titandioxidhydrat stammende Waschfiltrat wird durch die Leitung 24 in den Vorratsbehälter 6 der Waschstufe C eingespeist. Von da wird es mittels der Pumpe 20 durch die Leitung 14 in den Waschturm 3 eingeführt und durch den Flüssigkeitsverteiler 17 verteilt. Nach dem Waschvorgang wird die Waschflüssigkeit am unteren Ende des Turms 3 gesammelt und gelangt über die Leitung 9 in den Vorratsbehälter 6 und von dort aus über die Leitung 11 in den Vorratsbehälter 5 der Waschstufe B. Von hier aus wird die Waschflüssigkeit mittels der Pumpe 19 durch die Leitung 13 in den Waschturm 2 eingeführt und durch den Flüssigkeitsverteiler 16 verteilt. Danach wird die Waschflüssigkeit am unteren Ende des Waschturms 2 gesammelt und gelangt über die Leitung 8 in den Vorratsbehälter 5. Von dort wird die Waschflüssigkeit über die Leitung 10 in den Vorratsbehälter 4 der Waschstufe A eingeführt, von wo sie mittels der Pumpe 18 durch die Leitung 12 in den Waschturm 1 eingeführt und in ihm durch den Flüssigkeitsverteiler 15 verteilt wird. Von dort wird die Waschflüssigkeit über die Leitung 7 in den Vorratsbehälter 4 übergeführt, von wo sie als schwefelsäurehaltige Prozeßlösung durch die Leitung 26 ausgetragen und in den Aufschluß und/oder gegebenenfalls in den Lösebehälter für den Aufschlußkuchen geführt wird.

Grundsätzlich kann die gesamte Menge des Waschfiltrates in allen Waschstufen in die Waschtürme geführt und dort mit dem Abgas in Berührung gebracht werden. Es besteht aber auch gegebenenfalls die Möglichkeit, nicht die gesamte Menge des Waschfiltrates in alle Waschtürme zu schicken und dort zu verteilen, sondern einen Teil durch Leitungen direkt von einem oder mehreren der Vorratsbehälter in einen oder mehreren der anderen Vorratsbehälter zu schicken. Es kann ferner die Möglichkeit vorgesehen werden, die Waschflüssigkeit innerhalb der jeweiligen Waschstufe zu einem gewissen Anteil zwischen Waschturm und Vorratsbehälter im Kreis zu führen.

Durch diese beiden Maßnahmen kann im jeweiligen Vorratsbehälter und damit im zugehörigen Waschturm der betreffenden Waschstufe die Schwefelsäurekonzentration in der Waschflüssigkeit eingestellt werden.

In den folgenden Beispielen wird die Erfindung näher erläutert:

### Beispiel 1

Ein in einer Vorstufe von Titandioxidstaub, Schwefelsäure und Schwefeltrioxid befreites Calcinierabgas, das einen Schwefeldioxidgehalt von 4000 mg/m³ (Gas im Normzustand nach Abzug des Feuchtegehaltes an Wasserdampf) und einen Sauerstoffgehalt von 12 Volumenprozent, bezogen auf trockenes Gas nach Abzug des Feuchtegehaltes an Wasserdampf, besaß, wurde in einer Menge von 3000 m³/h (Gas im Normzustand nach Abzug des Feuchtegehaltes an Wasserdampf) mit einer Temperatur von 70 °C gemäß dem in der Abbildung gezeigten Fließbild einer aus drei mit leeren Waschtürmen versehenen Waschstufen A, B und C bestehenden Anlage zugeführt. Jeder der drei Waschtürme 1, 2 und 3 bestand aus glasfaserverstärktem Polyester und hatte einen inneren Querschnitt in Form eines Quadrates mit einer Kantenlänge von 700 mm und eine lichte Höhe von 9 m. Am oberen Ende war jeder Waschturm in Abständen von 1,4 m Höhe mit sechs Düsenstöcken bestückt. An jedem Düsenstock befanden sich zwei Vollkegeldüsen. Die Düsen jedes Waschturmes wurden mit 6 m³/h Waschflüssigkeit, welche eine Temperatur von 70 °C besaß, beaufschlagt. Für die Waschung des Calcinierabgases kam ein Waschfiltrat der Titandioxidhydratabtrennung zum Einsatz, das einen Schwefelsäuregehalt von 2 Gewichtsprozent und einen Eisengehalt von 0,3 Gewichtsprozent, von dem 47 Prozent als dreiwertiges Eisen vorlagen, besaß. Dieses Waschfiltrat wurde in einer Menge von 198,2 kg/h eingesetzt.

Das Waschfiltrat wurde durch die Leitung 24 in den Vorratsbehälter 6 der Waschstufe C eingeführt und von dort aus zunächst über die Leitung 14, die Düsen 17 und die Leitung 9 solange im Kreis geführt, bis sich in der Waschstufe C eine Schwefelsäurekonzentration von 4 Gewichtsprozent eingestellt hatte. Nach dieser Anlaufphase wurden entsprechende Anlaufphasen in den beiden anderen Waschstufen vorgenommen, bis sich auch dort stationäre Verhältnisse eingestellt hatten. Im Waschturm 2 und im Vorratsbehälter 5 der Waschstufe B wurde so eine Schwefelsäurekonzentration von 6,1 Gewichtsprozent und im Waschturm 1 und im Vorratsbehälter 4 der Waschstufe A eine Schwefelsäurekonzentration von 9.9 Gewichtsprozent eingestellt. Der Eisengehalt betrug im Vorratsbehälter 6 der Waschstufe C 0.29 Gewichtsprozent, von denen 50 Prozent im dreiwertigen Zustand vorlagen, Im Vorratsbehälter 5 der Waschstufe B 0,285 Gewichtsprozent, von denen 59 Prozent im dreiwertigen Zustand vorlagen, und im Vorratsbehälter 4 der Waschstufe A 0.28 Gewichtsprozent, von denen 67 Prozent im dreiwertigen Zustand vorlagen. Aus dem Waschturm 3 der Waschstufe C wurde über die Leitung 25 ein gereinigtes Calcinierabgas abgezogen, das nur noch einen Schwefeldioxidgehalt von 300 mg/m³ (Gas im Normzustand nach Abzug des Feuchtegehaltes an Wasserdampf) aufwies. Es konnte ohne weiteres in die Atmosphäre entlassen werden.

Aus dem Vorratsbehälter 4 der Waschstufe A wurde über die Leitung 26 ständig ein Teil der in diesem Vorratsbehälter 4 befindlichen Waschflüssigkeit als schwefelsäurehaltige Prozeßlösung in einer Menge von 212 kg/h abgezogen. Infolge ihres Schwefelsäuregehaltes von 9,9 Gewichtsprozent konnte diese Prozeßlösung direkt im Aufschluß und/oder gegebenenfalls zum Lösen des beim Aufschluß erhaltenen Aufschlußkuchens eingesetzt werden. Der Schwefeldioxidabscheidegrad lag bei 92,5 Prozent, und es fielen bei der Schwefeldioxidoxidation 17,0 kg/h Schwefelsaure an, die im Sulfatprozeß wieder nutzbringend verwertet werden konnte und so zu entsprechenden Einsparungen an Frischsäure führte.

### Beispiel 2

Es wurde eine aus drei Waschstufen A, B und C bestehende Anlage gemäß dem in der Abbildung gezeigten Fließbild eingesetzt. Jeder der drei Waschtürme 1, 2 und 3 bestand aus glasfaserverstärktem Polyester und hatte die gleichen Maße wie die in Beispiel 1 verwendeten Waschtürme. Jeder Waschturm war unterhalb der Flüssigkeitsverteiler 15, 16 und 17 auf einer Höhe von 7,5 m mit Füllkörpern des Typs 'Telleretten 2 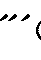 ® der Firma Ceilcote Korrosionstechnik GMbH Biebesheim/Rh. aus Polyethylen gefüllt. Dieser Anlage wurde ein in einer Vorstufe von Titandioxidstaub, Schwefelsäure und Schwefeltrioxid befreites Calcinierabgas, das einen Schwefeldioxidgehalt von 3500 mg/m³ (Gas im Normzustand nach Abzug des Feuchtegehaltes an Wasserdampf) und einen Sauerstoffgehalt von 14 Volumenprozent, bezogen auf trockenes Gas nach Abzug des Feuchtegehaltes an Wasserdampf, besaß, in einer Menge von 1800 m³/h (Gas im Normzustand nach Abzug des Feuchtegehaltes an Wasserdampf) mit einer Temperatur von 64 °C zugeführt. Die Füllkörper jedes Waschturmes wurden mit 12 m³/h Waschflüssig keit, welche eine Temperatur von 64 °C besaß. beaufschlagt. Für die Waschung des Calcinierabgases kam ein Waschfiltrat der Titandioxidhydratabtrennung zum Einsatz, das einen Schwefelsäuregehalt von 0,5 Gewichtsprozent und einen Eisengehalt von 0,3 Gewichtsprozent, von dem 20 Prozent als dreiwertiges Eisen vorlagen, besaß. Dieses Waschfiltrat wurde in einer Menge von 103,0 kg/h eingesetzt.

In den Vorratsbehältern 4, 5 und 6 wurde die Waschlösung mit Luft in einer Menge von je 10 m³/h (Gas im Normzustand) je Vorratsgefäß beaufschlagt.

Das Waschfiltrat wurde durch die Leitung 24 in den Vorratsbehälter 6 der Waschstufe C eingeführt und von dort aus zunächst über die Leitung 14, den Flüssigkeitsverteiler 17, die im Waschturm 3 befindliche Füllkörperschüttung und die Leitung 9 solange im Kreis geführt, bis sich in der Waschstufe C eine Schwefelsäurekonzentration von 1,7 Gewichtsprozent eingestellt hatte. Nach dieser Anlaufphase wurden entsprechende Anlaufphasen in den beiden anderen Waschstufen vorgenommen, bis sich auch dort stationäre Verhältnisse eingestellt hatten. Im Waschturm 2 und im Vorratsbehälter 5 der Waschstufe B wurde so eine Schwefelsäurekonzentration von 4,7 Gewichtsprozent und im Waschturm 1 und im Vorratsbehälter 4 der Waschstufe A eine Schwefelsäurekonzentration von 8,7 Gewichtsprozent eingestellt. Der Eisengehalt betrug im Vorratsbehälter 6 der Waschstufe C 0,28 Gewichtsprozent, von denen 99 Prozent im dreiwertigen Zustand vorlagen.

Aus dem Waschturm 3 der Waschstufe C wurde über die Leitung 25 ein gereinigtes Calcinierabgas abgezogen, das nur noch einen Schwefeldioxidgehalt von 210 mg/m³ (Gas im Normzustand nach Abzug des Feuchtegehaltes an Wasserdampf) aufwies. Es konnte ohne weiteres in die Atmosphäre entlassen werden.

Aus dem Vorratsbehälter 4 der Waschstufe A wurde über die Leitung 26 ständig ein Teil der in diesem Vorratsbehälter 4 befindlichen Waschflüssigkeit als schwefelsäurehaltige Prozeßlösung in einer Menge von 110 kg/h abgezogen. Infolge ihres Schwefelsäuregehaltes von 8,7 Gewichtsorozent konnte diese Prozeßlösung direkt im Aufschluß und/oder gegebenenfalls zum Lösen des beim Aufschluß erhaltenen Aufschlußkuchens eingesetzt werden. Der Schwefeldioxidabscheidegrad lag bei 94 Prozent, und es fielen bei der Schwefeldioxidoxidation 9,0 kg/h Schwefelsäure an, die im Sulfatprozeß wieder nutzbringend verwertet werden konnte und so zu entsprechenden Einsparungen an Frischsäure führte.

Bei den Beispielen wurden je Tonne hergestelltes Titandioxid 25 kg (Beispiel 1) bzw. 25.5 kg (Beispiel 2) Schwefeldioxid aus dem Calcinierabgas herausgeholt, das andernfalls in die Atmosphäre gelangt wäre. Bei den großen Mengen an Titandioxid, die in der Technik nach dem Sulfatprozeß hergestellt werden, können so mit dem erfindungsgemäßen Verfahren erhebliche Entlastungen in der Umwelt vorgenommen werden. Hinzu kommt, daß so ebenfalls erhebliche Mengen an Waschfiltrat, die sonst in den Kanal abgegeben würden und so ebenfalls die Umwelt belastet hätten, vom Kanal ferngehalten und wieder nutzbringend verwertet werden können.

## Patentansprüche

1. Verfahren zur Herstellung von Titandioxid durch Fällen von Titandioxidhydrat durch thermische Hydrolyse aus einer Titanylsulfatlösung, die nach dem Aufschluß von titan- und eisenhaltigen Materialien in Schwefelsäure erhalten wird, Abtrennen des ausgefällten Titandioxidhydrates von der Hydrolysenmutterlauge durch Filtration, Waschen des abgetrennten Titandioxidhydrates, wobei Waschfiltrat, das geringe Mengen an Schwefelsäure und Eisensulfaten enthält, anfällt, und Glühen des gewaschenen Tilandioxidhydrates, dadurch gekennzeichnet, daß
a1) ein Abgas, das beim Glühen des gewaschenen Titandioxidhydrates anfällt, das bis 4000 mg/m³ Schwefeldioxid (Gas im Normzustand nach Abzug des Feuchtegehaltes an Wasserdampf) und mindestens 8 Volumenprozent Sauerstoff, bezogen auf trockenes Gas nach Abzug des Feuchtegehaltes an Wasserdampf, enthält, mit dem eine Waschflüssigkeit bildenden Waschfiltrat, das zu Beginn des Kontaktes mit dem Abgas 0,2, bis 4 Gewichtsprozent H₂SO₄ und 0,2 bis 1 Gewichtsprozent Eisen in Form von Eisensulfaten enthält, behandelt wird, wobei der größte Teil des im Abgas enthaltenen Schwefeldioxids vom Waschfiltrat aufgenommen und in Schwefelsäure umgewandelt wird, wodurch der Schwefelsäuregehalt des Waschfiltrates im Verlauf der Behandlung des Abgases auf 8 bis 13 Gewichtsprozent an gehoben und eine schwefelsäurehaltige Prozeßlösung gebildet wird,
a2) im Waschfiltrat, bevor es mit dem Abgas in Berührung gebracht wird, ein Verhältnis der Schwefelsäurekonzentration zu der Gesamteisenkonzentration von mindestens 1 eingestellt wird und daß dieses Verhältnis in der aus dem Waschfiltrat gebildeten Waschflüssigkeit während der Behandlung des Abgases bis auf über 20 angehoben wird, und
b) diese schwefelsäurehaltige Prozeßlösung im Rahmen des Titandioxid-Herstellungsprozesses eingesetzt wird, wobei
c) die Behandlung des Abgases mit der Waschflüssigkeit, in welcher ein Verhältnis von dreiwertigem Eisen zu Gesamteisen von mehr als 0,05 eingehalten wird, in einer Reihe von mindestens zwei hintereinandergeschalteten Waschstufen derart durchgeführt wird, daß
c₁) das unbehandelte Abgas in die erste Waschstufe und das von der Titandioxidhydratwaschung herstammende frische Waschfiltrat in die letzte Waschstufe eingeführt wird,
c₂) das Abgas hintereinander durch die einzelnen Waschstufen hindurchgeführt und dort mit der aus dem Waschfiltrat gebildeten Waschflüssigkeit. deren Schwefelsäuregehalt von der, in Richtung des Abgasstromes gesehen, ersten bis zur letzten Waschstufe stufenweise abnimmt, dadurch behandelt wird, daß in jeder Waschstufe die Waschflüssigkeit in einem Waschturm in das Abgas in feinverteilter Form eingeführt wird, und
c₃) das gereinigte Abgas aus der letzten Waschstufe und die aus dem Waschfiltrat gebildete schwefelsäurehaltige Prozeßlösung aus der ersten Waschstufe abgezogen wird.

2. Verfahren nach Anspruch 1, dadurch gekennzeichnet, daß in jede Waschstufe außer der, in Richtung des Abgasstromes gesehen, letzten Waschstufe Waschflüssigkeit aus derjenigen Waschstufe eingeführt wird, die der betreffenden Waschstufe, in Richtung des Abgasstromes gesehen, unmittelbar folgt.

3. Verfahren nach Anspruch 1 oder 2 dadurch gekennzeichnet, daß die Behandlung des Abgases in drei Waschstufen vorgenommen wird.

4. Verfahren nach einem oder mehreren der Ansprüche 1 bis 3, dadurch gekennzeichnet, daß in jeder Waschstufe in der Waschflüssigkeit ein bestimmter Bereich für den Schwefelsäuregehalt eingestellt wird.

5. Verfahren nach Anspruch 4, dadurch gekennzeichnet, daß der Schwefelsäuregehalt in der Waschflüssigkeit dadurch eingestellt wird, daß mindestens ein Teil der Waschflüssigkeit innerhalb der Waschstufe zwischen dem Waschturm und einem Vorratsbehälter im Kreislauf geführt wird.

6. Verfahren nach einem oder mehreren der Ansprüche 1 bis 5, dadurch gekennzeichnet, daß außer in die, in Richtung des Abgasstromes gesehen, letzte Waschstufe auch in eine oder mehrere der anderen Waschstufen frisches Waschfiltrat eingeführt wird.

7. Verfahren nach einem oder mehreren der Ansprüche 1 bis 6, dadurch gekennzeichnet, daß in eine oder mehrere der Waschstufen Waschflüssigkeit aus einer und/oder mehreren derjenigen Waschstufen eingeführt wird, die nicht der betreffenden Waschstufe, in Richtung des Abgasstromes gesehen, unmittelbar folgen.

8. Verfahren nach einem oder mehreren der Ansprüche 1 bis 7, dadurch gekennzeichnet, daß in eine oder mehrere der Waschstufen Waschflüssigkeit aus einer und/oder mehreren derjenigen Waschstufen eingeführt wird, die der betreffenden Waschstufe, in Richtung des Abgasstromes gesehen, vorausgehen.

9. Verfahren nach einem oder mehreren der Ansprüche 1 bis 8, dadurch gekennzeichnet, daß die Behandlung des Abgases in drei Waschstufen derart vorgenommen wird, daß, in Richtung des Abgasstromes gesehen, in der ersten Waschstufe in der Waschflüssigkeit ein Schwefelsäuregehalt von 8 bis 12 Gewichtsprozent, in der zweiten Waschstufe in der Waschflüssigkeit ein Schwefelsäuregehalt von 3 bis 7 Gewichtsprozent und in der dritten Waschstufe in der Waschflüssigkeit ein Schwefelsäuregehalt von 0,2 bis 4 Gewichtsprozent eingestellt wird.

10. Verfahren nach einem oder mehreren der Ansprüche 1 bis 9, dadurch gekennzeichnet, daß die schwefelsäurehaltige Prozeßlösung in den Aufschluß zurückgeführt wird.

11. Verfahren nach einem oder mehreren der Ansprüche 1 bis 10, dadurch gekennzeichnet, daß beim Aufschluß von titan- und eisenhaltigen Materialien ein fester Aufschlußkuchen gebildet wird, der unter Bildung der Titanylsulfatlösung gelöst wird, wobei beim Lösen des Aufschlußkuchens die schwefelsäurehaltige Prozeßlösung eingesetzt wird.

12. Verfahren nach einem oder mehreren der Ansprüche 1 bis 11, dadurch gekennzeichnet, daß in den Waschtürmen eine Füllkörperschüttung angeordnet wird, die Waschflüssigkeit von oben in voller Menge auf die Füllkörperschüttung aufgebracht und in ihr verteilt wird und das Abgas von unten in die Füllkörperschüttung eingeführt und innerhalb der Füllkörperschüttung mit der feinverteilten Waschflüssigkeit in Berührung gebracht wird.

13. Verfahren nach einem oder mehreren der Ansprüche 1 bis 12, dadurch gekennzeichnet, daß in unterhalb der Waschtürme angeordneten Vorratsbehältern in die Waschflüssigkeit Luft eingeführt wird.

## Claims

1. A method of producing titanium dioxide by precipitating titanium dioxide hydrate by thermal hydrolysis of a titanyl sulphate solution obtained by disintegration of titanium-containing and iron-containing materials in sulphuric acid, separating the precipitated titanium dioxide hydrate from the hydrolysis mother liquor by filtration, washing the separated titanium dioxide hydrate and in the process producing washing filtrate containing small quantities of sulphuric acid and iron sulphates, and calcining the washed titanium dioxide hydrate, characterised in that
a1) a waste gas which is obtained during calcination of the washed titanium dioxide hydrate containing up to 4 000 mg/m³ sulphuric acid (gas in the normal state after withdrawal of the moisture content in the form of water vapour) and at least 8% by volume of oxygen relative to dry gas after withdrawal of the moisture content in the form of water vapour, is treated with the washing filtrate which forms a scrubbing liquid which at the beginning of contact with the waste gas contains 0.2 to 4% of H₂SO₄ by weight and 0.2 to 1% of iron by weight in the form of iron sulphates, the major part of the sulphur dioxide in the waste gas being taken up by the washing filtrate and converted into sulphuric acid, thus increasing the sulphuric acid content of the washing filtrate from 8 to 13 % by weight during treatment of the waste gas and forming a process solution containing sulphuric acid,
a2) in the washing filtrate, before being brought into contact with the waste gas, the ratio of the concentration of sulfuric acid to the total iron concentration is adjusted to at least 1 and this ratio is raised to over 20 in the scrubbing liquid formed from the washing filtrate during treatment of the waste gas
b) the process solution containing sulphuric acid is used in the titanium dioxide production process, and
c) the treatment of the waste gas with the scrubbing liquid, in which the ratio of trivalent iron to total iron is maintained at above 0.05, is carried out in a series of at least two successive scrubbing stages, in that
c₁) the untreated waste gas is introduced into the first scrubbing stage and the fresh washing filtrate obtained by washing titanium dioxide hydrate is introduced into the last washing stage.
c₂ the waste gas is conveyed successively through the individual washing stages and there treated with the scrubbing liquid formed by the washing filtrate and having a sulphuric acid content which decreases stepwise from the first to the last washing stage, considered in the direction of flow of the waste gas, so that in each washing stage the scrubbing liquid in a scrubbing tower is introduced into the waste gas in finely divided form and
c₃ the purified waste gas is withdrawn from the last washing stage and the process solution containing sulphuric acid and formed from the washing filtrate is withdrawn from the first washing stage.

2. A method according to claim 1, characterised in that in each washing stage, apart from the last washing stage as considered in the direction of the flow of waste gas, scrubbing liquid is introduced from the washing stage which immediately follows the washing stage in question, considered in the direction of the flow of waste gas.

3. A method according to claim 1 or 2 characterised in that the waste gas is treated in three washing stages.

4. A method according to one or more of claims 1 to 3, characterised in that in each washing stage the sulphuric acid content of the scrubbing liquid is adjusted to within a given range.

5. A method according to claim 4, characterised in that the sulphuric acid content in the scrubbing liquid is adjusted by circulating at least some of the scrubbing liquid in the washing stage between the scrubbing tower and a storage container.

6. A method according to one or more of claims 1 to 5, characterised in that fresh washing filtrate is introduced into one or more washing stages in addition to the last washing stage, as considered in the direction of flow of the waste gas.

7. A method according to one or more of claims 1 to 6, characterised in that scrubbing liquid is introduced into one or more washing stages from one and/or more of those washing stages which do not immediately follow the washing stage in question, as considered in the direction of flow of the waste gas.

8. A method according to one or more of claims 1 to 7, characterised in that scrubbing liquid is introduced into one or more of the washing stages from one and/or more of those washing stages which precede the washing stage in question, as considered in the direction of flow of the waste gas.

9. A method according to one or more of claims 1 to 8, characterised in that the waste gas is treated in three washing stages, in that, considered in the direction of the flow of waste gas, the sulphuric acid content is adjusted to 8 to 12% by weight in the scrubbing liquid in the first washing stage, 3 to 7% by weight in the scrubbing liquid in the second washing stage and 0.2 to 4% by weight in the scrubbing liquid in the third washing stage.

10. A method according to one or more of claims 1 to 9, characterised in that the process solution containing sulphuric acid is recycled to the disintegration unit.

11. A method according to one or more of claims 1 to 10, characterised in that during disintegration of titanium-containing and iron-containing materials, a solid disintegration cake is formed and is dissolved during production of the titanyl sulphate solution, the process solution containing sulphuric acid being used to dissolve the disintegration cake.

12. A method according to one or more of claims 1 to 11, characterised in that bulk packing material is placed in the scrubbing towers, the full quantity of scrubbing liquid is introduced from above on to the bulk packing material and distributed therein and the waste gas is introduced into the bulk packing material from beneath and brought in contact therein with the finely-divided scrubbing liquid.

13. A method according to one or more of claims 1 to 12, characterised in that air is introduced into the scrubbing liquid in storage containers disposed underneath the scrubbing towers.

## Revendications

1. Procédé de fabrication de bioxyde de titane par précipitation d'hydrate de bioxyde de titane par hydrolyse thermique, à partir d'une solution de sulfate de titanyle, qui a été obtenue après l'attaque de matières contenant du titane et du fer dans de l'acide sulfurique. séparation par filtration de l'hydrate de bioxyde de titane précipité d'avec la liqueur mère d'hydrolyse, lavage de l'hydrate de bioxyde de titane (ainsi) séparé, ce qui donne du filtrat de lavage contenant de faibles quantités d'acide sulfurique et de sulfates de fer, et calcination de l'hydrate de bioxyde de titane lavé, procédé caractérisé en ce :
a1) on soumet un gaz d'échappement, obtenu lors de la calcination de l'hydrate de bioxyde de titane lavé qui contient jusqu'à 4 000 mg/m³ de bioxyde de soufre (gaz à l'état normal, après enlèvement de l'humidité contenue sous forme de vapeur d'eau) et au moins 8 % en volume d'oxygène (par rapport au gaz sec après enlèvement de l'humidité contenue sous forme de vapeur d'eau), à un traitement par le filtrat de lavage formant un liquide de lavage et qui contient, au début du contact avec le gaz d'échappement, 0,2 à 4 % en poids de H₂SO₄ et 0,2 à 1 % en poids de fer sous forme de sulfates de fer, de sorte que la majeure partie du bioxyde de soufre contenue dans le gaz d'échappement est reprise par le filtrat de lavage et est transformée en acide sulfurique, ce qui élève la teneur en acide sulfurique du filtrat de lavage au cours du traitement du gaz d'échappement augmenta jusqu'à atteindre une valeur de 8 à 13 % en poids et forme une solution de traitement contenant de l'acide sulfurique,
a2) avant que le filtrat de lavage ne vienne en contact avec le gaz d'échappement, on ajuste dans le filtrat de lavage un rapport entre la concentration en acide sulfurique et la concentration totale en fer, au moins égal à 1 et en ce que, dans le liquide de lavage formé à partir du filtrat de lavage, ce rapport augmente jusqu'à une valeur supérieure à 20 pendant le traitement du gaz residuaire et
b) on utilise cette solution de traitement, contenant de l'acide sulfurique, dans le cadre du procédé de fabrication de bioxyde de titane,
c) en conduisant le traitement du gaz d'échappement par le liquide de lavage, dans lequel on maintient entre le fer trivalent et le fer total un rapport supérieur à 0,05, dans une série d'au moins deux étapes successives de lavage,
C₁) en introduisant dans la première étape de lavage le gaz d'échappement non traité et en introduisant dans la dernière étape de lavage le filtrat frais de lavage provenant du lavage de l'hydrate de bioxyde de titane ;
C₂) en faisant passer le gaz d'échappement successivement par les diverses étapes de lavage et en l'y traitant par le liquide de lavage formé à partir du filtrat de lavage dont la teneur en acide sulfurique diminue par étapes, de la première à la dernière étape de lavage (vues dans le sens de l'écoulement du gaz d'échappement) de manière que, dans chaque étape de lavage, le liquide de lavage soit introduit dans une tour dans laquelle le gaz d'échappement est introduit sous forme finement divisée, et
(C₃) en retirant du dernier étage de lavage le gaz d'échappement, épuré, et en retirant du premier étage de lavage la solution de traitement, contenant de l'acide sulfurique et formée à partir du filtrat de lavage.

2. Procédé selon la revendication 1, caractérisé en ce que, dans chaque étape de lavage sauf la dernière, on introduit du liquide de lavage provenant de J'étape de lavage qui suit immédiatement l'étape de lavage en cause dans le sens de l'écoulement du gaz résiduaire.

3. Procédé selon la revendication 1 ou 2, caractérisé en ce qu'on entreprend en trois étapes de lavage le traitement du gaz résiduaire.

4. Procédé selon une ou plusieurs des revendications 1 à 3, caractérise, en ce que, dans chaque étape de lavage on règle dans un domaine déterminé la teneur en acide sulfurique.

5. Procédé selon la revendication 4, caractérisé en ce qu'on règle la teneur en acide sulfurique du liquide de lavage en faisant circuler pendant l'étape de lavage une partie au moins du liquide de lavage en circuit entre la tour de lavage et un récipient de réserve.

6. Procédé selon une ou plusieurs des revendications 1 à 5, caractérisé en ce que, en plus de la dernière étape, vue dans le sens de l'écoulement du gaz d'échappement, on introduit également du filtrat frais de lavage dans une ou plusieurs des autres étapes de lavage.

7. Procédé selon une ou plusieurs des revendications 1 à 6, caractérisé en ce qu'on introduit dans une ou plusieurs des étapes de lavage du liquide de lavage provenant d'une ou plusieurs des étapes de lavage qui ne sui(ven)t pas immédiatement l'étape de lavage en cause, quand on regarde dans le sens de l'écoulement du gaz d'échappement.

8. Procédé selon une ou plusieurs des revendications 1 à 7, caractérisé en ce qu'on introduit, dans une ou plusieurs des étapes de lavage, du liquide de lavage provenant d'une et/ou de plusieurs étapes de lavage qui précèdent l'étape de lavage en cause, quand on regarde dans le sens de l'écoulement du gaz d'échappement.

9. Procédé selon une ou plusieurs des revendications 1 à 8, caractérisé en ce qu'on entreprend le traitement en trois étapes de lavage du gaz d'échappement de manière que, lorsqu'on regarde dans le sens de l'écoulement du gaz d'échappement, on ajuste dans la première étape de lavage une teneur en acide sulfurique dans le liquide de lavage qui est de 8 à 12 % en poids, dans la seconde étape de lavage une teneur en acide sulfurique de 3 à 7 % en poids dans le liquide de lavage, et dans la troisième étape de lavage, une teneur en acide sulfurique de 0,2 à 4 % en poids dans le liquide de lavage.

10. Procédé selon une ou plusieurs des revendications 1 à 9, caractérisé en ce que la solution de traitement, contenant de l'acide sulfurique, est recyclée vers l'attaque (chimique).

11. Procédé selon une ou plusieurs des revendications 1 à 10, caractérisé en ce que, lors de l'attaque (chimique) de matières contenant du titane et du fer, il se forme un gâteau solide résultant de l'attaque, qui est dissous avec formation d'une solution de sulfate de titanyle et l'on utilise, lors de la dissolution du gâteau résultant de l'attaque, la solution de traitement contenant de l'acide sulfurique.

12. Procédé selon une ou plusieurs des revendications 1 à 11, caractérisé en ce qu'on dispose dans les tours de lavage un agencement de corps de garnissage, on applique par le haut en quantité totale le liquide de lavage sur l'agencement de corps de garnissage et on y répartit ce liquide, et l'on introduit par le bas le gaz d'échappement dans l'agencement des corps de garnissage et l'on provoque, à l'intérieur de l'agencement des corps de garnissage, la mise en contact avec le liquide de lavage, finement réparti.

13. Procédé selon une ou plusieurs des revendications 1 à 12, caractérisé en ce que de l'air est introduit dans le liquide de lavage dans des récipients de réserve disposés au dessous des tours de lavage.
